# EUROPÄISCHE PATENTANMELDUNG

(11) **EP 0 672 597 A1**
(43) Veröffentlichungstag der Anmeldung: **20.09.1995**
(21) Anmeldenummer: 95103474.3
(22) Anmeldetag: 10.03.1995
(51) Int. Cl.: B65G 69/28

(54) **Überladebrücke für Rampen**

(30) Priorität: 18.03.1994 DE 4409346
(71) Anmelder: Alten, Kurt, D-30974 Wennigsen (DE)
(72) Erfinder: Alten, Kurt, D-30974 Wennigsen (DE); Borchardt, Horst, D-30974 Wennigsen (DE)
(74) Vertreter: Depmeyer, Lothar

(57) **Zusammenfassung**

Die Erfindung betrifft eine Überladebrücke für Rampen mit einer verschwenkbaren Brückenplatte und einer am vorderen Ende daran befestigten ein- und ausfahrbaren Verlängerung (12) und einer oder mehreren verschwenkbaren Stützen (22) für die in Normalstellung befindliche Brückenplatte, wobei die Verschwenkung der Stützen (22) durch die Verlängerung (12) bewirkt wirkt, wenn diese ausgefahren wird. Aufgrund der Erfindung soll das Verschwenken der Stützen vereinfacht und verbessert werden. Dazu erhalten die Stützen (22) erfindungsgemäss einen Stellarm (29), auf den ein an der Verlängerung (12) befindlicher Vorsprung (31) beim Ausfahren der Verlängerung auffahren kann in der Weise, dass damit der Stellarm und die Stützen verschwenkt werden. Der Vorsprung (31) erstreckt sich über die Länge des Hubes der Verlängerung (12).

## Beschreibung

Die Erfindung betrifft eine Überladebrücke für Rampen mit einer rampenseitig um eine waagerechte Achse schwenkbaren, durch längs verlaufende Unterzüge versteifte Brückenplatte, die am vorderen Ende eine ein- und ausfahrbare Verlängerung zur Abstützung der Brückenplatte auf der zu be- bzw. entladenden Plattform eines Fahrzeuges aufweist und mit einer oder mehreren ihrer Abstützung im Ruhezustand dienenden Stützen versehen ist, die zur Einnahme der Ruhestellung durch Ausfahren der Verlängerung um eine waagerechte Achse in der Weise verschwenkbar sind, dass das untere Ende der Stützen in Richtung auf das rampenseitige Ende der Überladebrücke bewegt wird.

Bei den bekannten Überladebrücken dieser Art werden die Stützen über ein von der Verlängerung betätigtes Gestänge betätigt und verschwenkt, wenn die Verlängerung ausgefahren wird. Abgesehen davon, dass derartige Gestänge störanfällig sind, besteht die Gefahr einer Beschädigung dieser Gestänge, wenn die bereits verschwenkten Stützen z.B. durch ein weiteres Absinken der Brückenplatte oder durch Fremdkörper unterhalb der Brückenplatte zu einer weitergehenden Verschwenkung gezwungen werden.

Diese Nachteile sollen aufgrund der Erfindung beseitigt werden. Demgemäss soll eine besonders betriebssichere Verschwenkung der Stützen erreicht, darüber hinaus aber sichergestellt werden, dass selbst dann, wenn bereits eine Verschwenkung der Stützen durch Verfahren der Verlängerung stattgefunden hat, ein weiteres Verschwenken der Stützen ohne weiteres möglich ist.

Zur Lösung dieser Aufgabe ist erfindungsgemäss vorgesehen, mit den Stützen einen Stellarm und mit der Verlängerung einen Vorsprung zu verbinden in der Weise, dass beim Ausfahren der Verlängerung der Stellarm durch den Vorsprung beaufschlagt und dieser zusammen mit der Stütze verschwenkt wird, wobei der Stellarm lose auf dem Vorsprung aufliegt und der Vorsprung eine solche Länge aufweist, dass die Stützen über den gesamten Hub der Verlängerung durch den Vorsprung an einem Zurückschwenken gehindert sind.

Dabei kann jeder Stütze ein Stellarm zugeordnet werden, vorzugsweise werden jedoch nur ein Stellarm und ein Vorsprung - zweckmässigerweise mittig unterhalb der Brückenplatte - vorgesehen. Der Stellarm wird in diesem Falle drehfest mit einer quer zur Brückenplatte verlaufenden Welle verbunden, mit der dann zwei oder mehrere Stützen drehfest vereinigt werden. Die Welle ist in diesem Falle das Übertragungsglied zwischen dem Stellarm und den in beliebiger Zahl vorgesehenen Stützen.

Da zwischen dem Stellarm und dem an der Verlängerung befindlichen Vorsprung keine feste, sondern nur eine lose Verbindung vorgesehen ist, können die Stützen nicht zurückschwenken, wohl aber eine noch grössere Verschwenkung erfahren.

Der an der Verlängerung anzuordnende Vorsprung kann kulissenartig ausgeführt sein. Auf jeden Fall sollte eine Auflaufschräge angebracht werden, die ein stossfreies Auflaufen des Stellarmes - vorzugsweise am freien Ende mit einer Rolle ausgestattet - sicherstellt. So kann auch eine vorne abgeschrägte Leiste benutzt werden, deren Länge dem Hub der Verlängerung entsprechen muss.

Weitere Einzelheiten der Erfindung werden anhand der Zeichnung erläutert, in der ein Ausführungsbeispiel der Erfindung dargestellt ist. Es zeigen :
Fig. 1 eine Überladebrücke für Rampen in der Ruhestellung, und zwar im Längsschnitt,
Fig. 2 eine Teildraufsicht auf die Brücke gemäss Fig. 1 und
Fig. 3 einen Schnitt nach der Linie III - III von Fig. 1.

Die Brückenplatte 1 ist rampenseitig um eine waagerechte Achse 2 an der Rampe 3 verschwenkbar. Sie schliesst im Ruhezustand mit ihrem Deckblech 4 mit der Oberfläche 5 der Rampe 3 mit der vorderen Kante 6 ab. In der Rampe 3 befindet sich eine der Grösse der Brückenplatte 1 entsprechende Ausnehmung 7, in die die Brückenplatte 1 eintauchen kann. Zum Verschwenken der Brückenplatte 1 werden nicht dargestellte Arbeitszylinder benötigt.

Zur Versteifung der Brückenplatte 1 dienen mehrere, längs zur Brücke verlaufende Unterzüge 8, die sich bis zum vorderen Ende der Brückenplatte 1 erstrecken, die seitlich durch im wesentlichen dreieckförmige Seitenbleche 1o abgeschlossen ist, welche zur Verankerung eines Querträgers 11 dienen, auf dem die Unterzüge 8 aufliegen.

Vorne an der Brückenplatte 1 befindet sich eine Verlängerung 12, deren Auflageteil 13 im ausgefahrenen Zustand der Verlängerung 12 auf das Fahrzeug aufgelegt werden kann. Nach Abschluss der Verladearbeiten wird die Verlängerung 12 eingezogen. Der Verschiebung der Verlängerung 12 dient ein bei 12' angezeigter Arbeitszylinder. Senkrecht zum Auflageteil 12 erstreckt sich ein Schild 14. Nach hinten geht das Auflageteil 13 in eine mit Längsschlitzen 15 ausgestattete Platte 16 über. Diese Schlitze werden von den Unterzügen 8 durchsetzt. Die zwischen den Längsschlitzen 15 verbleibenden Teile 21 der Platte 16 sind von Längsträgern 17 unterstützt, die die Platte 16 nach hinten hin überragen.

Die Längsträger 17 ruhen vorne auf einer verdrehbar angeordneten Welle 18, die sich auf dem Querträger 11 in nicht dargestellten Lagerböcken abstützt, aber auch mit ihren Enden an den Seitenblechen 10 gelagert sein kann. Wie aus Fig. 3 erkennbar ist, durchsetzt die Welle 18 auch die Unterzüge 8. Im hinteren Bereich stützen sich die Längsträger 17 auf einer ebenfalls die Unterzüge 8 durchsetzenden Querachse 19 ab. Dort und auch auf der Welle 18 sind Distanzhülsen 20 vorgesehen, die der Seitenführung der Längsträger 17 dienen.

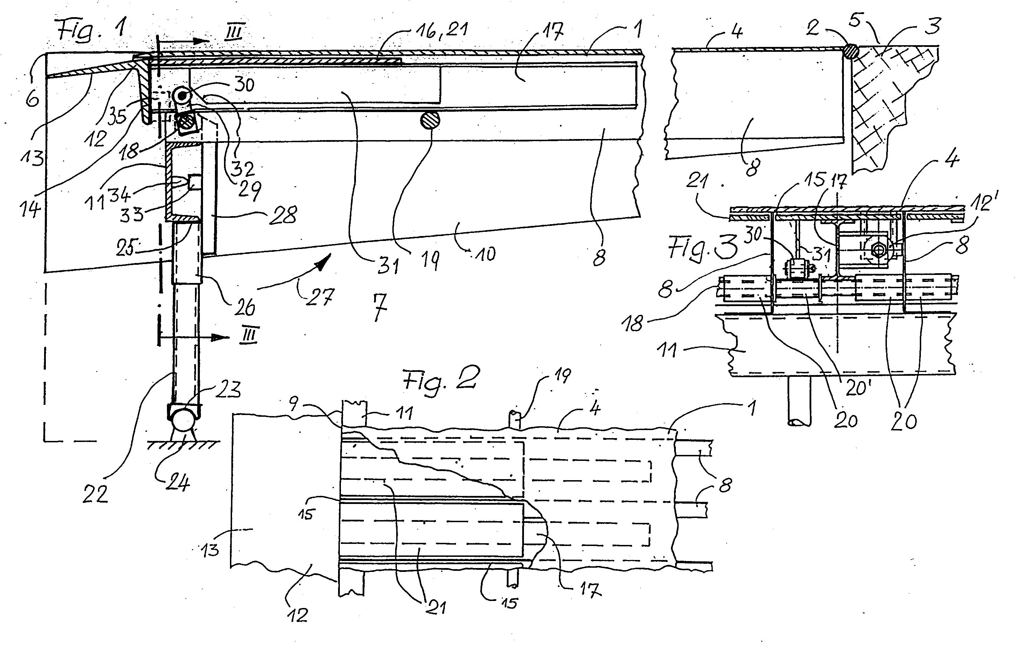

Gemäss Fig. 2 wird die Brückenplatte 1 in der Ruhestellung gemäss Fig. 1 durch Stützen 22 gehalten, und zwar von einer Stütze 22 an einem und einer zweiten Stütze 22 am gegenüberliegenden Rand der Brückenplatte 1. Am unteren Ende liegen sie mit einem konkaven Fuss 23 auf einem Widerlager 24 in der Sohle der Ausnehmung 7 auf. Mit ihrer oberen Stirnfläche 25 unterfangen die Stützen 22 den Querträger 11. Damit wird die Überladebrücke beim Befahren des Deckbleches 4 gegen Absinken gesichert.

Die Stützen 22 sind vergleichsweise kurz, da sich der Querträger 11 von allen Bestandteilen der Brückenplatte 1 am weitesten nach unten in Richtung auf die vorerwähnte Sohle erstreckt. Es genügt ein Rohr als Stützenkörper.

Auf dem oberen Abschnitt der Stützen 22 ist eine Hülse 26 befestigt, an der ein zur Halterung und zum Verschwenken der Stützen 22 in Richtung des Pfeiles 27 dienender Arm 28 angreift, welcher an einer Distanzhülse 20 befestigt ist, die drehfest mit der Welle 18 verbunden ist.

Etwa mittig unterhalb der Brückenplatte 1 ist ebenfalls eine drehfest mit der Welle 18 verbundene Distanzhülse 20' vorgesehen, an der ein sich zunächst nach oben erstreckender Stellarm 29 angreift, der am freien Ende mit einer Rolle 30 ausgestattet ist, und zwar in der Weise, dass eine Verschwenkung des Stellarmes 29 nach vorne zur Verlängerung 12 hin zu der Verschwenkung der Stützen 22 im Sinne des Pfeiles 27 führt.

Damit diese Verschwenkung automatisch mit dem Ausfahren der Verlängerung 12 geschieht, ist ein Abschnitt 21 mit einer nach unten gerichteten Kulisse 31 mit einer vorne gelegenen Auflaufschräge 32 vorgesehen. Wird nun die Verlängerung 12 ausgefahren, so bewirkt die Kulisse 31 eine Verschwenkung des Stellarmes 29. Damit erfolgt die gewünschte Verschwenkung der Stützen 22 im Sinne des Pfeiles 27; die Brückenplatte 1 kann nunmehr tief in die Ausnehmung 7 eintauchen, ohne durch die Stützen 22 gehindert zu werden.

Die Kulisse 31 ist gemäss Fig. 1 und 3 als eine sich in Längsrichtung der Brückenplatte 1 erstreckende Leiste ausgeführt, die über ihre Länge hinweg von gleicher Höhe ist und lediglich am vorderen Ende die Auflaufschräge 32 aufweist. Die Rolle 30 liegt dabei mit einer Pressung am unteren Rand der Leiste an, die praktisch durch das Gewicht der Stütze 22 mit Halterung 28 bzw. das hierdurch bewirkte Drehmoment zustandekommt ( wenn von dem durch den Stellarm bedingten Gegenmoment abgesehen wird ).

Wichtig ist noch, dass die einmal nach hinten oben abgeschwenkten Stützen 22 bei einem Auftreffen auf evtl. Hindernisse innerhalb der Ausnehmung 7 weiter nach oben schwenken können, da die Kulisse 31 zwar ein Abklappen der Stützen 22 nach unten verhindert, eine weitere Verschwenkung der Stützen 22 im Sinne des Pfeiles 27 jedoch nicht verhindern kann. Das Gewicht der Stütze 22 zieht aber immer wieder die Rolle 30 gegen die Kulisse 31, sollte der Widerstand bzw. das Hindernis in der Ausnehmung nicht mehr wirken können.

Die Hülse 26 ermöglicht im übrigen eine Verstellung der Höhenlage der Stützen 22.

Der Arm 28 ist noch mit einem Vorsprung 33 versehen, der beim Zurückschwenken der Stütze 22 auf einen elastischen Puffer 34 auftreffen kann.

Wird die Verlängerung 12 eingezogen, so schwenken die Stützen 22 gegen die Richtung des Pfeiles 27 aufgrund ihres Eigengewichtes in die Stellung gemäss Fig. 1 zurück. Sollte jedoch z.B. aus Gründen der Reibung ein Zurückschwenken nicht eintreten, so wird ein ggfs. elastisch nachgiebiger Anschlag 35 wirksam, der zwischen dem Schild 14 und dem Stellarm 29 angeordnet ist und dessen Konturen durch einen gestrichelten Linienzug wiedergegeben sind. Befindet sich die Stütze 22 somit ungewollt in einer Schrägstellung und wird unter diesen Voraussetzungen die Verlängerung 12 eingefahren, so trifft der Anschlag 35 auf die Rolle 30. Dadurch wird eine Versc hwenkung gegen die Richtung des Pfeiles 27 bewirkt, und die Stütze 22 nimmt dann wieder die senkrechte Stellung, um die Brückenplatte 1 absenken bzw. den Fuss 23 in das Widerlager 24 einführen zu können.

Die Welle 18 hat also den besonderen Vorteil, dass sie einerseits die Betätigung der Stützenverschwenkung bewirkt und andererseits als Auflager für die Verlängerung 12 im vorderen Abschnitt dient. Insoweit erfüllt sie zwei Aufgaben.

## Patentansprüche

1. Überladebrücke für Rampen mit einer rampenseitig um eine waagerechte Achse schwenkbaren Brückenplatte, die am vorderen Ende eine ein- und ausfahrbare Verlängerung zur Abstützung der Brückenplatte auf der zu be- bzw. entladenden Plattform eines Fahrzeuges aufweist und mit einer oder mehreren ihrer Abstützung im Ruhezustand dienenden Stützen versehen ist, die zur Einnahme der Ruhestellung durch Ausfahren der Verlängerung um eine waagerechte Achse in der Weise verschwenkbar sind, dass das untere Ende der Stützen in Richtung auf das rampenseitige Ende der Überladebrücke bewegt wird, dadurch gekennzeichnet, dass mit den Stützen (22) ein Stellarm (29) und mit der Verlängerung (12) ein Vorsprung (31) in der Weise verbunden sind, dass beim Ausfahren der Verlängerung (12) der Stellarm (29) durch den Vorsprung (31) beaufschlagt und der Stellarm (29) zusammen mit den Stützen (22) verschwenkt wird, wobei der Stellarm (29) lose auf dem Vorsprung (31) aufliegt und der Vorsprung (31) eine solche Länge aufweist, dass die Stützen (22) über den gesamten Hub der Verlängerung (12) durch den Vorsprung (31) an einem Zurückschwenken gehindert sind.

2. Überladebrücke nach Anspruch 1, dadurch gekennzeichnet, dass der Stellarm (29) an einer quer zur Überladebrücke verlaufenden Welle (18) befestigt ist und zwei oder mehrere Stützen (22) drehfest mit der Welle (18) verbunden sind.

3. Überladebrücke nach Anspruch 1, dadurch gekennzeichnet, dass der Vorsprung kulissenartig ausgeführt ist.

4. Überladebrücke nach Anspruch 1, dadurch gekennzeichnet, dass der Vorsprung von einer sich längs zur Überladebrücke erstreckenden Leiste (31) gebildet ist, der eine Auflaufschräge (32) für den Stellarm (29) aufweist.

5. Überladebrücke nach Anspruch 1, dadurch gekennzeichnet, dass der Stellarm (29) am freien Ende mit einer Rolle (30) versehen ist.

6. Überladebrücke nach Anspruch 1 und 2, dadurch gekennzeichnet, dass die Welle (18) auf einem die Brückenplatte (1) am vorderen Ende unterstützenden Querträger (11) gelagert ist.

7. Überladebrücke nach Anspruch 1 und 2, dadurch gekennzeichnet, dass der Stellarm (29) etwa mittig in Bezug auf die Brückenplatte (1) an der Welle (18) befestigt und an jedem Ende der Welle (18) am Brückenrand mit der Welle (18) eine Stütze (22) verbunden ist.

8. Überladebrücke nach Anspruch 1, dadurch gekennzeichnet, dass im verschwenkten Zustand der Stützen (22) die Pressung zwischen dem Vorsprung (31) und dem Stellarm (29) im wesentlichen durch das Gewicht der Stützen (22) mit Halterung (28) bestimmt ist.

9. Überladebrücke nach Anspruch 1, dadurch gekennzeichnet, dass in der Wirkstellung der Stützen (22) der Stellarm (29) sich im wesentlichen in Richtung der Stützen (22) erstreckt und im Vergleich zu den Stützen (22) auf der gegenüberliegenden Seite der Schwenkachse ( Welle 19 ) angeordnet ist.

10. Überladebrücke nach Anspruch 4, dadurch gekennzeichnet, dass die Leistenlänge gleich oder grösser ist als der Hub der Verlängerung (12).

11. Überladebrücke nach Anspruch 1, dadurch gekennzeichnet, dass an der dem Vorsprung (31) gegenüberliegenden Seite des Stellarmes (29) an der Verlängerung (12) ein ggfs. elastischer Anschlag (35) für den Stellarm (29) vorgesehen ist in der Weise, dass beim Einfahren der Verlängerung (12) der Anschlag (35) auf den Stellarm (29) auftrifft und durch dessen Verschwenkung die Stütze (22) in ihre Wirkstellung zurückgeführt wird.

12. Überladebrücke nach Anspruch 11, dadurch gekennzeichnet, dass der Anschlag (35) hinter einem senkrechten Schenkel (14) der Verlängerung (12) angeordnet und daran bzw. an einem mit diesem Schenkel verbundenen Element befestigt ist.
